# EUROPÄISCHE PATENTSCHRIFT

(11) **EP 2 875 887 B1**
(45) Veröffentlichungstag und Bekanntmachung des Hinweises auf die Patenterteilung: **14.09.2016**
(21) Anmeldenummer: 14192799.6
(22) Anmeldetag: 12.11.2014
(51) Int. Cl.: B23C 3/12

(54) **Eckverputzvorrichtung**
Device for removing burrs from corners
Appareil pour enlever des bavures de coins

(30) Priorität: 20.11.2013 DE 102013112814
(43) Veröffentlichungstag der Anmeldung: 27.05.2015
(73) Patentinhaber: Rotox Besitz- und Verwaltungsgesellschaft mbH, 65611 Brechen (DE)
(72) Erfinder: Schmittinger, Guido, 56850 Hahn (DE); Niewrzoll, Christof, 65620 Waldbrunn (DE); Eisenbach, Bernd, 65611 Brechen (DE)
(74) Vertreter: Müller, Eckhard

(56) Entgegenhaltungen:
- EP-A1- 1 543 906
- EP-A2- 1 199 146
- EP-A2- 1 779 990
- EP-A2- 1 800 827
- EP-B1- 0 705 659

## Beschreibung

Die Erfindung betrifft eine Eckverputzvorrichtung gemäß dem Oberbegriff des Anspruchs 1 sowie ein Verfahren gemäß dem Oberbegriff des Anspruchs 10 zur Bearbeitung von Eckverbindungen von aus Profilstücken geschweißten Rahmen.

Eine solche Eckverputzvorrichtung ist aus der EP 1 800 827 A2 bekannt.

Eckverputzvorrichtungen der eingangs genannten Art sind im Stand der Technik bekannt. So offenbart die EP 0 705 659 B1 eine Bearbeitungseinheit zum Bearbeiten der Eckverbindungen von aus Profilstücken geschweißten Rahmen. Die dort beschriebene Eckverputzvorrichtung ist für solche Fenster- oder Türrahmen vorgesehen, die auf der nach innen gerichteten Seite eine Kurvenkontur aufweisen. Die Eckverputzvorrichtung weist eine Bearbeitungseinheit zur Abtragung der durch das Schweißen der Profilstücke an den Eckverbindungen entstandenen Schweißraupe auf, wobei die Bearbeitungseinheit ein Bearbeitungswerkzeug sowie zwei seitlich davon positionierte Taster umfasst. Die Bearbeitungseinheit ist in einer Richtung senkrecht zur Aufnahmeebene des Rahmens und entlang der Eckverbindung verschiebbar und mittels einer Federvorspannung gegen die Kurvenkontur des Rahmens drückbar. Um Toleranzen beim Schweißvorgang, beispielsweise einen Versatz der Profilstücke im Bereich der Gehrung, ausgleichen zu können, kann die Einheit aus Taster und Bearbeitungswerkzeug für eine seitliche Bewegung, etwa parallel zur Aufspannebene, an einem Werkzeugträger gelagert sein. Durch diese schwimmende Lagerung mit seitlicher Bewegungsfreiheit gelangen beide Tastelemente auch bei einem Versatz der Profilstücke im Gehrungsbereich in Profilkontakt.

Aus der EP 1 543 906 A1 ist ebenfalls eine Bearbeitungseinheit zum Bearbeiten von Eckverbindungen von aus Profilstücken geschweißten Rahmen bekannt. Dabei ist ein Spanmesser, das an einer Tasterlagerung gelagert ist, an Tastern festgelegt. Die Taster sind an Führungsstangen und durch eine Feder vorgespannt gelagert. Die Lagerung an den Führungsstangen erlaubt eine axial schwimmende Lagerung des Spanmessers relativ zur Tasterlagerung. Die Tasterlagerung ist ihrerseits an einem Halter festgelegt. Weitere Eckverputzvorrichtungen sind unter anderem aus der DE 35 39 670 A1 sowie der DE 42 47 939 A1 bekannt.

Nachteilig bei den bekannten Eckverputzvorrichtungen ist, dass die bekannten Eckverputzvorrichtungen zum einwandfreien Funktionieren einen ordnungsgemäß ausgerichteten Rahmen benötigen. Da das Verfahren des Verputzens jedoch spanabhebend ist, kann es vorkommen, dass Späne der abgestochenen Schweißraupen auf der Einspannvorrichtung für die zu bearbeitenden Fensterrahmen liegen bleiben. Werden diese nicht sorgfältig entfernt, können die Reste ein ordnungsgemäßes Positionieren des nachfolgend aufgelegten Rahmens behindern. Der Rahmen liegt dann gegebenenfalls nicht vollständig in der richtigen Lage und kann neben einem seitlichen Versatz auch verdreht liegen, so dass die Erstreckungsrichtung der Eckverbindung einen Winkelversatz zu einer vorgesehenen Erstreckungsrichtung aufweist.

Aufgabe der Erfindung ist es somit, eine bekannte Eckverputzvorrichtung dahingehend weiterzubilden, dass eine bessere Anpassung auf fehlerhaft positionierte zu bearbeitende Rahmen möglich ist und somit der Ausschuss reduziert wird.

Die Aufgabe wird gelöst durch eine Eckverputzvorrichtung gemäß Anspruch 1. Weitere Ausgestaltungen der erfindungsgemäßen Vorrichtung sind Gegenstand der abhängigen Ansprüche.

Eine erfindungsgemäße Eckverputzvorrichtung dient zum Bearbeiten von Eckverbindungen von aus Profilstücken geschweißten Rahmen. Solche Rahmen können insbesondere Fenster- oder Türrahmen sein. Derartige geschweißte Rahmen bestehen in aller Regel aus einem Kunststoff, z.B. einem thermoplastischen Kunststoff. Zum Schweißen werden die Profilstücke in ihrem Verbindungsbereich, meistens einer Gehrung, erhitzt, bis sie plastisch verformbar sind. Dann werden die Profilstücke gegeneinander gepresst und somit eine stoffschlüssige Verbindung zwischen den ihnen hergestellt. Beim Zusammenpressen der Profilstücke entsteht im Bereich der Eckverbindung eine Schweißraupe aus dem verdrängten Kunststoff, die mit Hilfe der erfindungsgemäßen Eckverputzvorrichtung abzutragen ist.

Zum Abtragen weist die Eckverputzvorrichtung eine Bearbeitungseinheit auf, an der ein oder mehrere Bearbeitungswerkzeuge sowie wenigstens ein Tastelement angeordnet sind. Das Bearbeitungswerkzeug kann ein oder mehrere Stechmesser aufweisen. Alternativ kann das Bearbeitungswerkzeug Bohrer oder Fräser oder andere, vor allem spanabhebende Werkzeuge aufweisen. Mit Hilfe des Tastelements wird die Bearbeitungseinheit relativ zum Rahmen ausgerichtet. Das Tastelement kommt dabei mit den Profilstücken zur Anlage und bewirkt dadurch, dass das Bearbeitungswerkzeug zu einer Innenecke oder einer Außenecke der zu bearbeitenden Eckverbindung des Rahmens positioniert wird.

Die Bearbeitungseinheit ist des Weiteren in etwa senkrecht zu einer Aufnahmeebene des Rahmens und entlang einer Erstreckungsrichtung der Eckverbindung verschiebbar. Durch die Verschiebbarkeit in etwa senkrecht zur Aufnahmeebene des Rahmens kann die Bearbeitungseinheit relativ zum Rahmen positioniert werden. Durch eine Verschiebbarkeit in Richtung der Erstreckung der Eckverbindung wird ein Entfernen, z.B. Abstechen oder Abfräsen, der Schweißraupe ermöglicht.

Des Weiteren kann das Bearbeitungswerkzeug oder die Bearbeitungseinheit, insbesondere das oder die Stechmesser, höhen- und neigungsverstellbar sein. Die Verstellbarkeit kann durch Höhen- und Neigungsverstellung des Bearbeitungswerkzeuges, der Bearbeitungseinheit oder anderen Teilen der erfindungsgemäßen Abstechvorrichtung gegeben sein.

Im Rahmen der Erfindung ist vorgesehen, dass das Bearbeitungswerkzeug in der Aufnahmeebene des Rahmens verschwenkbar gehalten ist, so dass das Bearbeitungswerkzeug, insbesondere das oder die Stechmesser, im Wesentlichen parallel zur Erstreckungsrichtung der Eckverbindung einstellbar ist. Dabei kann das Bearbeitungswerkzeug unmittelbar oder mittelbar verschwenkbar gehalten sein. Eine unmittelbare verschwenkbare Halterung kann durch eine Verschwenkbarkeit des Bearbeitungswerkzeuges relativ zur Bearbeitungseinheit verwirklicht werden. Mittelbar verschwenkbare Halterungen können durch eine Verschwenkung von anderen Bestandteilen der erfindungsgemäßen Eckverputzvorrichtung zueinander möglich, z.B. durch eine verschwenkbare Halterung der Bearbeitungseinheit zu einem Werkzeughalter, an dem die Bearbeitungseinheit angeordnet ist.

Mit dem Verschwenken des Bearbeitungswerkzeuges wird erreicht, dass das Bearbeitungswerkzeug nicht nur einen linearen Versatz wie die bislang aus dem Stand der Technik bekannten Eckverputzvorrichtungen ausgleichen kann, sondern auch einen Winkelversatz, wie er beim fehlerhaften Einspannen von Rahmen vorkommen kann, beispielsweise aufgrund von Schweißraupenresten zwischen Rahmen und Anschlag. Somit wird eine Bearbeitung in korrekter Erstreckungsrichtung der Eckverbindung ermöglicht.

Gemäß einer ersten möglichen weiteren Ausgestaltung der erfindungsgemäßen Eckverputzvorrichtung kann vorgesehen sein, dass die Bearbeitungseinheit mittels einer Lagerung drehbar an einer Führung gelagert ist. Dies kann unmittelbar oder mittelbar, z.B. mittels eines Werkzeughalters, an dem die Bearbeitungseinheit angeordnet ist, vorgenommen werden. Eine solche Lagerung ist mit geringem Aufwand möglich und erspart insoweit komplexe Konstruktionen zur Verwirklichung einer Verschwenkung des Bearbeitungswerkzeuges relativ zur Bearbeitungseinheit.

Dabei kann in einer weiteren Ausgestaltung vorgesehen sein, dass die Führung eine Achse aufweist, auf der die Bearbeitungseinheit gelagert ist. Eine solche Achse ermöglicht eine Rotation der Bearbeitungseinheit einerseits und einen Linearvorschub in einer Ebene senkrecht zur Rotationsrichtung.

Gemäß der Erfindung ist vorgesehen dass das Bearbeitungswerkzeug relativ zu dem Werkzeughalter senkrecht zur Erstreckungsrichtung der Eckverbindung verschiebbar ist. Dies kann mittelbar oder unmittelbar gelöst werden. Eine mittelbare Lösung wäre durch eine senkrecht zur Bearbeitungsrichtung verschiebbare Bearbeitungseinheit gegeben. Damit ist neben einer Anpassung der Ausrichtung des Bearbeitungswerkzeuges zur Erstreckungsrichtung auch ein seitlicher Versatz der Eckverbindung relativ zu einer idealen Lage der Eckverbindung kompensierbar. Die Verschiebbarkeit kann insbesondere in der Aufnahmeebene des Rahmens gegeben sein.

In einer Ausgestaltung der Erfindung ist die Bearbeitungseinheit dabei als Schlitten ausgebildet, mittels dessen die Bearbeitungseinheit an dem Werkzeughalter verschiebbar angeordnet ist. Der Schlitten kann im Wesentlichen oder vollständig senkrecht zu einer Vorschubrichtung der Bearbeitungseinheit ausgerichtet sein. Statt eines eindimensional verstellbaren Schlittens kann auch ein zweidimensional verstellbarer Schlitten bzw. eine Schlittenkombination vorgesehen sein.

Damit die Eckverputzvorrichtung bzw. das Bearbeitungswerkzeug oder die Bearbeitungseinheit während des Bearbeitungsvorgangs des Rahmens nicht verdreht wird, kann in einer weiterführenden Ausgestaltung vorgesehen sein, dass die verschwenkbare Halterung des Werkzeughalters zur Achse arretierbar ist. So kann die Bearbeitungseinheit relativ zur Achse des Werkzeughalters verdrehbar sein, bis das Bearbeitungswerkzeug relativ zur Eckverbindung richtig ausgerichtet ist und kann dann arretiert werden, um den Bearbeitungsvorgang zu starten. Die Arretierung kann erfolgen, wenn das Bearbeitungswerkzeug an einer Innenecke des zu bearbeitenden Rahmens oder an einer entsprechenden Außenecke liegt.

Darüber hinaus kann in einer weiteren möglichen Ausgestaltung auch der Schlitten arretierbar sein. Auf diese Weise lässt sich der seitliche Versatz der Bearbeitungseinheit arretieren.

Beim Vorschub der Bearbeitungseinheit kann in dieser Ausgestaltung einerseits der Vorschub in die tatsächliche Erstreckungsrichtung der Eckverbindung des möglicherweise nicht präzise ausgerichteten Rahmens erfolgen oder in Richtung einer vorgesehenen Erstreckungsrichtung, wobei in diesem Fall ein seitlicher Versatz zwischen Vorschub und Erstreckungsrichtung durch den Schlitten kompensierbar sein muss. Hierzu kann der Schlitten auf die Eckverbindung automatisch zentrierbar ausgestaltet sein, beispielsweise mittels Zentrierelementen. Alternativ kann der seitliche Versatz mittels eines geregelten oder gesteuerten Antriebes eingestellt werden. In dem ersten Fall, in dem sich die Bearbeitungseinheit direkt in Erstreckungsrichtung bewegt, kann eine Information über die tatsächliche Erstreckungsrichtung durch den Winkelversatz der Bearbeitungseinheit gegenüber einer Nullstellung herangezogen werden. In dem zweiten Fall mit einem Antrieb für die Einstellung des seitlichen Versatzes ist es möglich, den seitlichen Versatz zu jedem Zeitpunkt und an jeder Stelle der Bearbeitung aus der Winkelposition und dem seitlichen Versatz des Bearbeitungswerkzeuges zu ermitteln. Auch Sensoren können verwendet werden, beispielsweise optische Sensoren.

Zur Arretierung von Schlitten oder verschwenkbarer Halterung kann jeweils ein Klemmhebel vorgesehen sein, der zur Arretierung aktivierbar ist. Der Klemmhebel für den Schlitten kann den Schlitten gegen eine Schiene blockieren oder durch reib- oder formschlüssiges Zusammenwirken mit einem anderen Bauteil der Bearbeitungseinheit. Der Klemmhebel für die Drehbewegung kann entweder an der Achse drehfest angeordnet sein oder mit diesem reib- oder formschlüssig zusammenwirken.

Gemäß einer weiterführenden möglichen Ausgestaltung kann vorgesehen sein, dass der Klemmhebel hydraulisch oder pneumatisch betätigbar ist. Zu diesen Zwecken kann der Klemmhebel mit einem hydraulischen oder pneumatischen Zylinder zusammenwirken.

In einer weiteren möglichen Ausbildung der erfindungsgemäßen Eckverputzvorrichtung kann der Schlitten wenigstens ein seitlich von dem Bearbeitungswerkzeug angeordnetes Tastelement aufweisen. Das Tastelement kann das Bearbeitungswerkzeug beiderseits umgeben und zwei Tastflanken aufweisen. Statt eines Tastelements können beiderseits des Bearbeitungswerkezeuges je ein Tastelement mit je einer Tastflanke vorgesehen sein. Mit Hilfe der Tastelemente ist eine Selbstzentrierung der Eckverputzvorrichtung auf eine Ecke des zu bearbeitenden Rahmens ermöglicht. Die Tastelemente weisen den Winkel der Profilstücke des Rahmens zueinander auf, so dass die beiden Tastelemente bei richtiger Positionierung der erfindungsgemäßen Eckverputzvorrichtung gleichzeitig an beiden Profilstücken anliegen.

Die Erfindung betrifft des Weiteren ein Verfahren zum Betrieb einer Eckverputzvorrichtung, bei dem eine Bearbeitungseinheit schwimmend verschwenkbar mittelbar oder unmittelbar an einer Führung gehalten ist, wobei die Bearbeitungseinheit an eine Innenecke eines Rahmens herangefahren wird und mittels eines an der Bearbeitungseinheit angeordneten Tastelements zum Rahmen axial positioniert wird, wobei die Bearbeitungseinheit mittels der Verschwenkbarkeit hinsichtlich seiner Ausrichtung positioniert wird. Dadurch kann bei einem nicht ideal positionierten Rahmen eine exakte Ausrichtung der Bearbeitungswerkzeuge der Bearbeitungseinheit, z.B. ein oder mehrere Stechmesser, zu einer Innenecke und zu einer tatsächlichen Erstreckungsrichtung einer zu entfernenden Schweißraupen erreicht werden.

In einer weiteren möglichen Ausgestaltung des erfindungsgemäßen Verfahrens kann die Bearbeitungseinheit schwimmend an einem Werkzeughalter geführt sein, wobei beim Anfahren an die Innenecke des Rahmens ein seitlicher Versatz der tatsächlichen Lage der Innenecke zu einer Ideallage mittels der schwimmenden Lagerung der Bearbeitungseinheit ausgeglichen wird.

In einer darüber hinaus möglichen weiteren Ausgestaltung kann vorgesehen sein, dass die schwimmende Lagerung und/oder die schwimmende Führung nach der Positionierung, aber vor einem Abstechen der Schweißraupe arretiert wird.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen.

### Ausführungsbeispiel

Die Erfindung wird anhand eines Ausführungsbeispiels erläutert. Dabei zeigen schematisch:
- Figur 1: eine schematische perspektivische Ansicht einer erfindungsgemäßen Eckverputzvorrichtung;
- Figur 2.1: eine Draufsicht auf einen Werkzeughalter der erfindungsgemäßen Eckverputzvorrichtung;
- Figur 2.2: eine Draufsicht auf eine Bearbeitungseinheit;
- Figur 2.3: eine Draufsicht auf die Bearbeitungseinheit aus Figur 2.2 mit korrekt positioniertem Schneidwerkzeug;
- Figur 3: eine vergrößerte Draufsicht auf den Werkzeughalter;
- Figur 4: eine Schnittansicht entlang der Schnittlinie A-A gem. Figur 3;
- Figur 5: eine Schnittansicht gemäß der Schnittlinie B-B aus Figur 3;
- Figur 6: eine Frontalansicht auf den Werkzeughalter, sowie
- Figur 7: eine Ansicht auf eine Unterseite des Werkzeughalters.

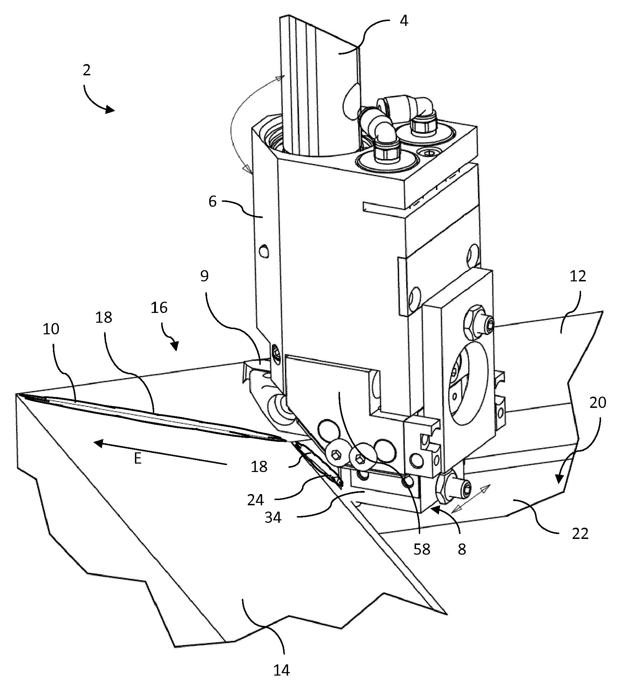

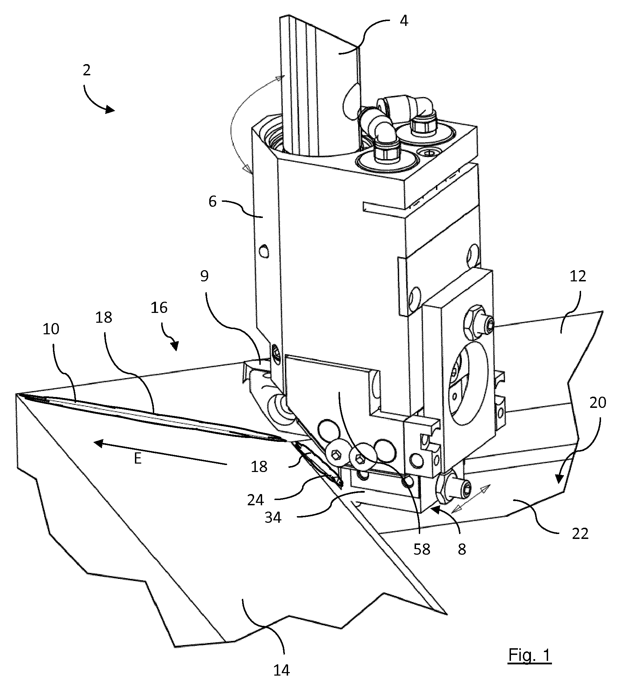

Figur 1 zeigt eine schematische perspektivische Ansicht einer erfindungsgemäßen Eckverputzvorrichtung 2.

Die Eckverputzvorrichtung 2 weist einen an einer Achse 4 gelagerten Werkzeughalter 6 auf. An dem Werkzeughalter 6 ist eine Bearbeitungseinheit 8 angeordnet. Die Bearbeitungseinheit 8 ist mittels eines Schlittens schwimmend an dem Werkzeughalter 6 angeordnet, sodass die Bearbeitungseinheit 8 in Pfeilrichtung gegenüber dem Werkzeughalter 6 verschiebbar ist. An der Bearbeitungseinheit 8 ist als Bearbeitungswerkzeug ein Stechmesser 9 sowie ein in Figur 1 nicht sichtbares weiteres Stechmesser festgelegt. Statt eines Stechmessers könnte auch ein anderes Werkzeug verwendet werden, z.B. ein Fräser oder dergleichen.

Die erfindungsgemäße Eckverputzvorrichtung 2 dient zum Bearbeiten einer Eckverbindung 10 eines aus zwei Profilstücken 12, 14 zusammengeschweißten Rahmens 16. Die Profilstücke 12, 14 bestehen aus Kunststoff, z.B. einem thermoplastischen Kunststoff. Die Eckverbindung 10 ist von einer Schweißraupe 18 bedeckt. Die Schweißraupe 18 entsteht durch das Herstellverfahren des Rahmens 16. Die Profilstücke 12, 14 werden in ihrem Verbindungsbereich, also vorliegend an ihrer Gehrung, erwärmt, wodurch der Kunststoff in diesem Bereich weich und adhäsiv wird. In dem erwärmtem Zustand werden die Profilstücke 12, 14 gegeneinander gepresst, wodurch zwischen beiden Profilstücken 12, 14 eine stoffschlüssige Verbindung entsteht. Beim Zusammenpressen wird Kunststoffmaterial verdrängt. Dieses Kunststoffmaterial wirft sich zu einer Schweißraupe 18 auf. Die Schweißraupe 18 stört die Ästhetik des Rahmens 16 und muss daher entfernt werden. Die Schweißraupe 18 muss somit mit Hilfe der Stechmesser 9 und dem weiteren Stechmesser der Eckverputzvorrichtung 2 abgestochen werden.

Die Profilstücke 12, 14 können eben bzw. abschnittsweise eben sein oder eine gewölbte Kontur aufweisen, so dass die Eckverbindung 10 eine Gerade, eine abschnittsweise aus Geraden zusammengesetzte Strecke oder eine Krümmung beschreibt.

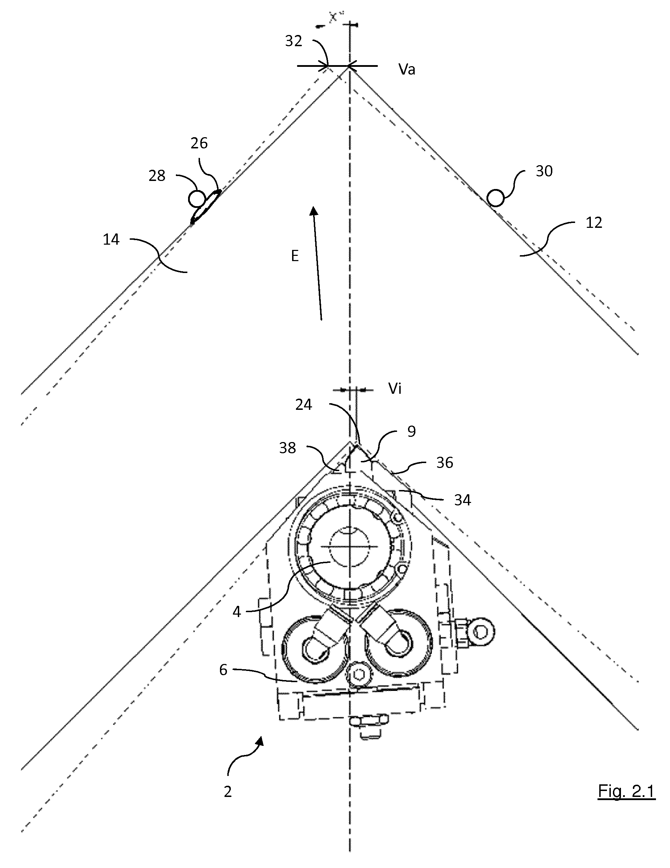

Der Rahmen 16 ist zur Entfernung der Schweißraupe 18 in einer Aufnahmevorrichtung in einer Aufnahmeebene 20 gehalten, wobei die Eckverputzvorrichtung 2 in dieser Aufnahmeebene 20 verstellbar ist. Die Positionierung des Rahmens 16 findet üblicherweise durch in Figur 2.1 dargestellte Anschläge 28, 30 statt. Dadurch ist die zu verputzende Eckverbindung 10 bei allen zu verputzenden Rahmen 16 idealerweise an der gleichen Position und in der gleichen Richtung ausgerichtet. Da das Verfahren jedoch spanabhebend ist, kommt es in der Praxis häufiger vor, dass beim Rahmenwechsel von der vorherigen Bearbeitung abgetragenes Schweißraupenmaterial auf einen Rahmenträger 22 fällt, der die Aufnahmeebene 20 bestimmt, dort liegenbleibt und beim Auflegen des nächsten Rahmens 16 dann zwischen Rahmen 16 und Anschlag eingeklemmt wird. Dadurch wird eine Fehlpositionierung des Rahmens 16 bedingt, die die Lage und Erstreckungsrichtung E der Eckverbindung 10 gegenüber einer idealen Lage und Erstreckungsrichtung ändert. Bei herkömmlichen Eckverputzvorrichtungen würde dies dazu führen, dass die zu verputzende Ecke nicht genau getroffen und nicht richtig bearbeitet wird, was den fehlerhaft bearbeiteten Rahmen zum Ausschuss macht.

Mit Hilfe der erfindungsgemäßen Eckverputzvorrichtung 2 ist eine automatische Selbstjustierung des Werkzeughalters 6 zur Position der Eckverbindung 10 und deren Erstreckungsrichtung E gegeben. Dies wird dadurch erreicht, dass der Werkzeughalter 6 relativ um die Achse 4 verdrehbar gelagert ist und dass die Bearbeitungseinheit 8 mittels einer Schlittenkombination axial verschiebbar relativ im Werkzeughalter 6 gehalten ist. Die Bearbeitungseinheit 8 kann alternativ selbst als Schlitten oder Schlittenkombination ausgebildet sein.

Die Bearbeitungseinheit 8 weist in Figur 1 nicht sichtbare Tastflanken auf, die bei korrekter Positionierung an den Profilstücken 12, 14 zur Anlage kommen. Bei Vorschub des Werkzeughalters 6 entlang der idealen Erstreckungsrichtung wird bei einem fehlpositionierten Rahmen 16 eine Tastflanke des Tastelements zuerst anschlagen und eine Verschiebung der zu diesem Zeitpunkt schwimmend gehaltenen Bearbeitungseinheit 8 bedingen, bis die andere Tastflanke des Tastelements an dem anderen Profilstück anschlägt. Dabei findet gleichzeitig eine Verdrehung des Werkzeughalters 6 um die Achse 4 statt, sodass neben der Positionierung auch die Winkelausrichtung der Bearbeitungseinheit 6 erfolgt.

Mit Hilfe dieses Verfahrens lassen sich Werkzeughalter 6 und Bearbeitungseinheit 8 exakt auf eine Innenecke 24 des Rahmens 16 positionieren. Danach muss der Werkzeughalter 6 nur noch entlang der Erstreckungsrichtung E der Eckverbindung vorgeschoben werden.

Figur 2.1 zeigt eine Draufsicht auf die Eckverputzvorrichtung 2in einer Position, in der sie korrekt relativ zu dem Rahmen 16 positioniert ist.

Der Rahmen 16 in seiner aktuellen Lage (gestrichelt dargestellt) ist, beispielweise durch einen Schweißnahtrest 26, der zwischen einem Anschlag 28 und dem Profilstück 14 liegt, relativ zu einer Ideallage (durchgezogen dargestellt) verschoben. Dies hat einerseits Auswirkung auf die tatsächliche Erstreckungsrichtung E des Rahmens 16, andererseits aber auch auf die Position von Innenecke 24 und Außenecke 32. Die Innenecke 24 ist um einen Versatz Vi verschoben, die Außenecke 32 um einen Versatz Va. Gegenüber der Ideallage des Rahmens ergibt sich durch die Differenz der Versatze Vi und Va sowie der Länge der Eckverbindung 10 ein Winkelversatz X. Auf den Winkelversatz X und den Versatz Vi an der Innenecke 24 muss die Eckverputzvorrichtung 2 beim Anfahren der Innenecke 24 eingestellt werden.

Die in der Darstellung gemäß Figur 2.1 unterhalb des Werkzeughalters 6 angeordnete Bearbeitungseinheit 8 weist wie bereits erwähnt ein Tastelement 34 mit zwei Tastflankenpaaren 36, 38 sowie 41, 42 auf, die zu einem Stechmesser 9 sowie einem Stechmesser 40 zugeordnet sind. Die Tastflankenpaar sind derart angeordnet, dass das Stechmesser 9 bei gleichzeitiger Anlage der beiden Tastflanken 36, 38 in einer korrekten Bearbeitungsposition zum Verputzen der Innenecke 24 ist und dass das Stechmesser 40 bei gleichzeitiger Anlage der beiden Tastflanken 41, 42 in einer korrekten Bearbeitungsposition zum Verputzen der Eckverbindung 10 ist.

Bei Anfahren des der Bearbeitungseinheit 8 an die Innenecke 24 kommt zuerst die Tastflanke 38 mit der Innenseite des Profilstücks 14 in Anlage, wodurch der Werkzeughalter 6 einerseits verdreht wird und andererseits die Bearbeitungseinheit 8 seitlich zu dem Werkzeughalter 6 verschoben wird. Bei richtiger Positionierung gelangt auch die Tastflanke 36 mit der Innenseite des Profilstücks 12 in Kontakt.

Die Bearbeitungseinheit 8 ist somit korrekt relativ zu Innenecke 24 und in Erstreckungsrichtung E, die einen Winkelversatz X gegenüber der idealen Erstreckungsrichtung aufweist, positioniert. Nach dieser Positionierung kann der erzeugte Winkelversatz X wie der erzeugte seitliche Versatz der Bearbeitungseinheit 8 arretiert werden.

Durch eine Bewegung gegen die Normale der Darstellungsebene von Figur 2.1 ist ein Abstechen einer Schweißraupe an der Innenecke 24 möglich. Eine solche Abstechbewegung ist durch Höhenverstellung des Werkzeughalters 6 möglich.

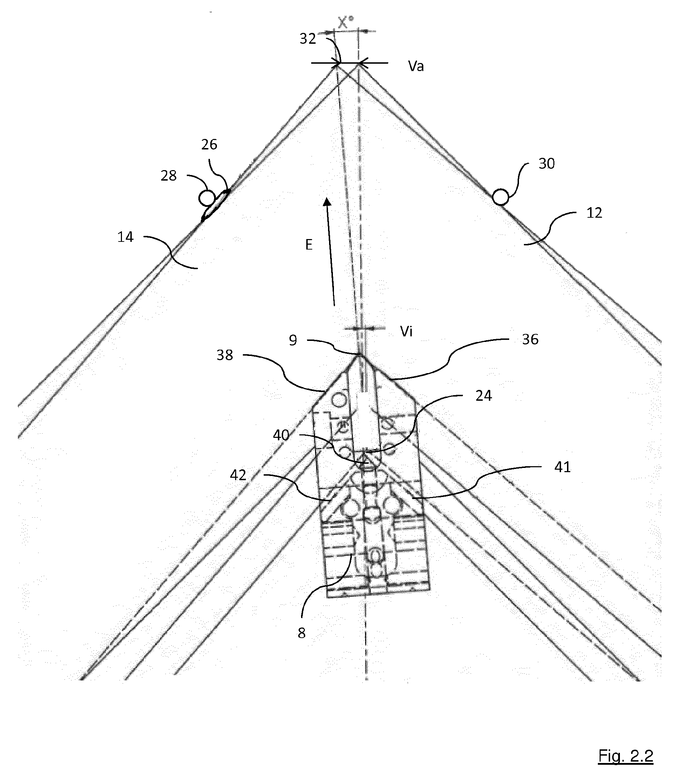

Figur 2.2 zeigt eine Draufsicht auf eine Bearbeitungseinheit 8. Der Werkzeughalter 6 aus Figur 2.1 ist in Figur 2.2 nicht dargestellt.

Die Bearbeitungseinheit 8 ist in der Darstellung gemäß Figur 2.2 gegenüber der Position in Figur 2.1 weiter in Bearbeitungsrichtung E vorgeschoben. Bei diesem Vorschub wird ein Stechmesser 40 relativ zur Innenecke 24 positioniert. Zur Positionierung des Stechmessers 40 sind weitere Tastflanken 41, 42 vorgesehen, die in der korrekten Position in Anlage mit den Profilstücken 12, 14 des Rahmens 16 sind.

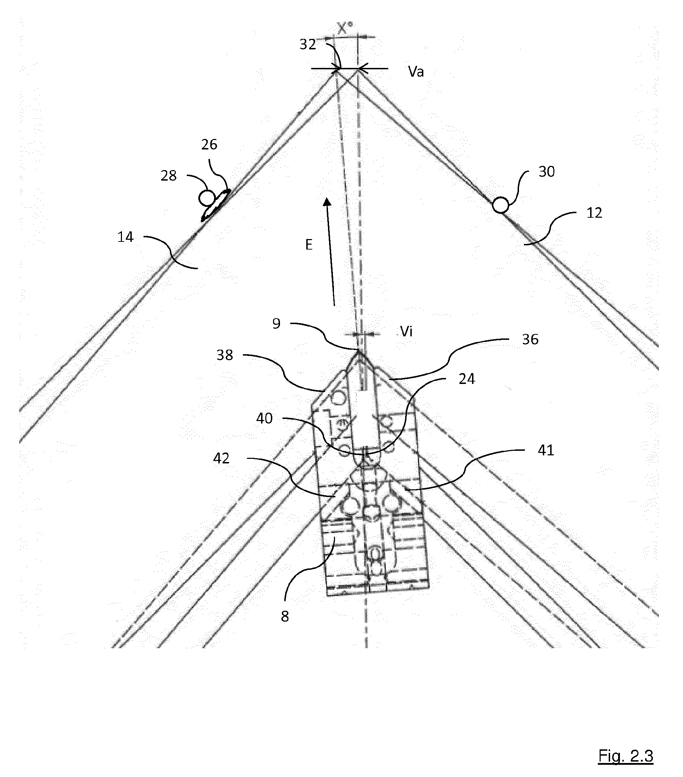

Figur 2.3 zeigt eine Draufsicht auf die Bearbeitungseinheit 8 aus Figur 2.2 bei korrekter Positionierung des Stechmessers 40 in der Innenecke 24. Beide Tastflanken 41, 42 sind in Anlage mit dem Rahmen 18.

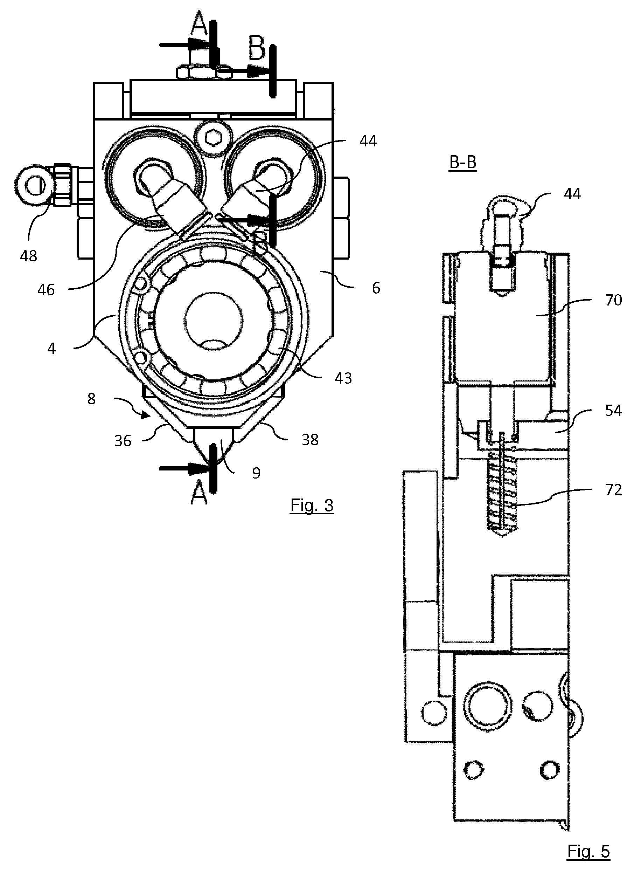

Figur 3 zeigt eine vergrößerte Draufsicht auf den Werkzeughalter 6 der Eckverputzvorrichtung 2.

Der Werkzeughalter 6 ist drehbar an der Achse 4 gelagert. Zu diesem Zweck wird ein Kugellager 43 eingesetzt. An dem Werkzeughalter 6 sind des Weiteren Pneumatikanschlüsse 44,46, 48 vorgesehen, an die Pneumatikleitungen angeschlossen werden können. Die Pneumatikanschlüsse 44, 46 sind so positioniert, dass die Pneumatikleitungen in der Achse 4 geführt sein können. Mit Hilfe der daran anzuschließenden Pneumatikleitungen lässt sich die Arretierung von Werkzeughalter 6 zur Achse 4 sowie von Bearbeitungseinheit 8 zu Werkzeughalter 6 betätigen.

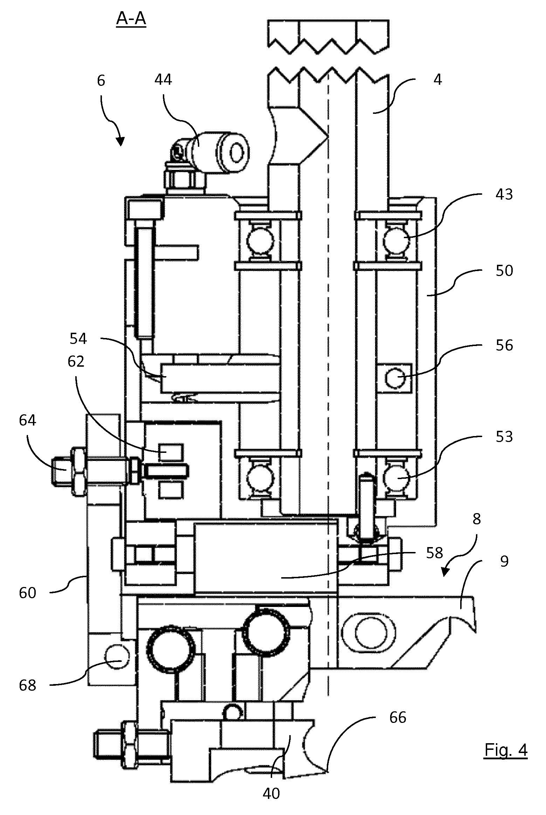

Figur 4 zeigt einen Schnitt entlang der Schnittlinie A-A aus Figur 3.

Die Achse 4 reicht weit in ein Gehäuse 50 herein. Der Werkzeughalter 6 ist mittels eines weiteren Kugellagers 52 an der Achse 4 gelagert.

Zur Fixierung der Drehbewegung ist ein Klemmhebel 54 vorgesehen, der um einen Drehpunkt 56 verschwenkbar gelagert ist und der pneumatisch betätigbar ist. Der Hebel 54 ist drehfest zur Achse 4 angeordnet, beispielsweise direkt an der Achse 4 Der Klemmhebel 54 kann form- oder kraftschlüssig mit dem Werkzeughalter 6 zusammenwirken, so dass eine Rotation des Werkzeughalters 6 relativ zur Achse 4 verhindert werden kann. Gemäß einer alternativen Ausgestaltung wäre denkbar, dass der Klemmhebel 54 in die Achse 4 eingreift und kraft- oder formschlüssig ein Verdrehen der Achse 4 verhindert.

Zur Vorspannung der Stechmesser 9, 40 gegen den Rahmen 16 ist die Bearbeitungseinheit 8 auf einem Schlitten 58 geführt. Der Schlitten 58 ist in und gegen die Vorschubrichtung E relativ zum Werkzeughalter 6 verschiebbar. Der Schlitten 58 ist mit einer nicht sichtbaren Feder gegen den Werkzeughalter 6 abgestützt. Die Vorspannung erlaubt einen Ausgleich von Unebenheiten im Rahmen 16.

Die Bearbeitungseinheit 8 lässt sich mithilfe eines Klemmhebels 60 arretieren. Hierzu ist der Klemmhebel 60 mittels eines Pneumatikzylinders 62 gegen eine Stellschraube 64 pressbar.

Das Stechmesser 40 weist des Weiteren eine Schneide 66 auf. Mit Hilfe der Schneide 66 des Stechmessers 40 lässt sich die Schweißraupe 18 vom Rahmen 16 lösen.

Figur 5 zeigt einen Schnitt durch den Werkzeughalter 6 entlang der Schnittlinie B-B aus Figur 3.

An dem Pneumatikanschluss 44 ist ein Pneumatikzylinder 70 angeordnet, der den Klemmhebel 54 betätigt und somit außer Eingriff bringt. Auf diese Weise kann eine Drehbewegung des Werkzeughalters 6 um die Achse 4 ermöglicht werden. Bei Beaufschlagen des Pneumatikzylinders 70 mit Druckluft wirkt der Pneumatikzylinder 70 der Kraft einer Druckfeder 72 entgegen. Sobald der Pneumatikzylinder 70 nicht mehr mit Druck beaufschlagt ist, drückt die Druckfeder 72 den Klemmhebel 54 wieder nach oben und bringt ihn zurück in Eingriff. Dadurch wird eine Drehbewegung des Werkzeughalters 6 blockiert.

In einer alternativen Ausgestaltung kann das Wirkprinzip auch umgekehrt verwirklicht sein. Dabei kann durch Betätigen des Pneumatikzylinders 70 eine Arretierung des Werkzeughalters 6 bewirkt werden.

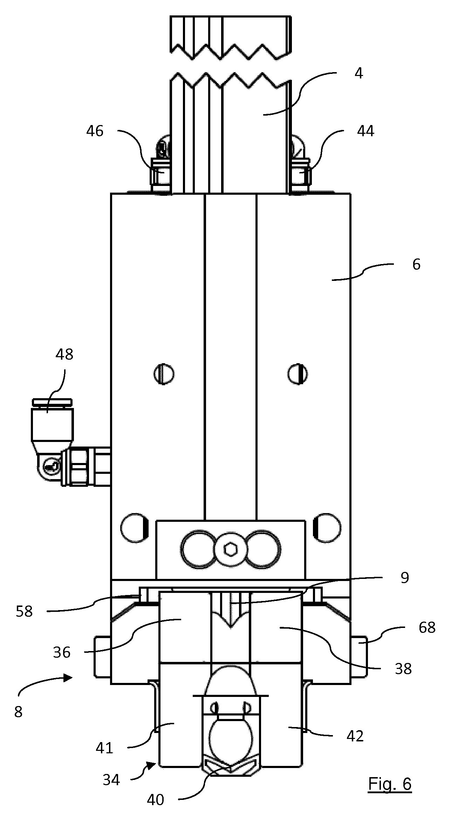

Figur 6 zeigt eine Frontalansicht auf den Werkzeughalter 6. Die Frontalansicht ist die Ansicht entgegen der Vorschubrichtung zur Bearbeitung eines Rahmens 16.

Die Bearbeitungseinheit 8 ist an dem Schlitten 58 seitlich beweglich geführt. Die Bearbeitungseinheit 8 kann über Druckluftbeaufschlagung und entsprechende Betätigung des zugehörigen Klemmhebels 60 arretiert werden.

Das Tastelement 34 umgibt die Schneide 40 V-förmig. Die beiden Tastflanken 36, 38 bilden in der Regel einen 90°-Winkel.

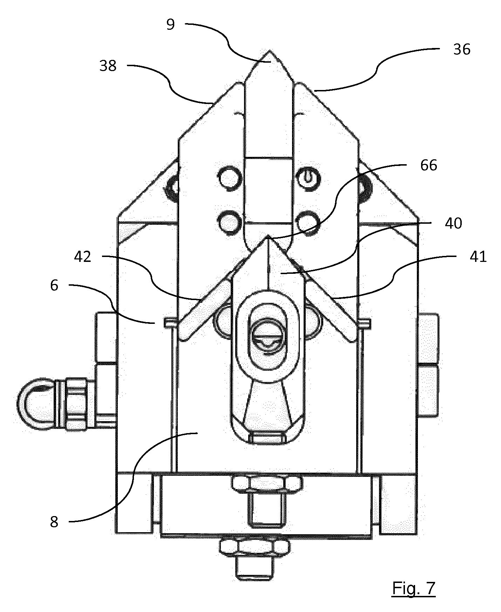

Figur 7 zeigt eine Ansicht auf eine Unterseite des Werkzeughalters 6. In der Ansicht sind die zwei Paare an Tastflanken 36, 38 zur Positionierung des Stechmessers 9 sowie die Tastflanken 41, 42 zur Positionierung des Stechmessers 40 zu erkennen, mit denen das Bearbeitungswerkzeug 8 relativ zum zu bearbeitenden Rahmen 16 positioniert wird.

### Bezugszeichenliste

- 2: Eckverputzvorrichtung
- 4: Achse
- 6: Werkzeughalter
- 8: Bearbeitungseinheit
- 9: Stechmesser
- 10: Eckverbindung
- 12, 14: Profilstücke
- 16: Rahmen
- 18: Schweißraupe
- 20: Aufnahmeebene
- 22: Rahmenträger
- 24: Innenecke
- 26: Schweißnahtrest
- 28, 30: Anschlag
- 32: Außenecke
- 34: Tastelement
- 36, 38: Tastflanke
- 40: Stechmesser
- 41, 42: Tastflanke
- 43: Kugellager
- 44, 46, 48: Pneumatikanschlüsse
- 50: Gehäuse
- 52: Kugellager
- 54: Klemmhebel Drehbewegung
- 56: Drehpunkt
- 58: Schlitten
- 60: Klemmhebel Linearbewegung
- 62: Pneumatikzylinder
- 64: Stellschraube
- 66: Schneide
- 68: Drehpunkt
- 70: Pneumatikzylinder
- 72: Druckfeder

- E: Erstreckungsrichtung
- Vi: Versatz Innenecke
- Va: Versatz Außenecke
- X: Winkelversatz

## Patentansprüche

1. Eckverputzvorrichtung zur Bearbeitung von Eckverbindungen (10) von aus Profilstücken (12, 14) geschweißten Rahmen (16), insbesondere Fenster- und Türrahmen, insbesondere aus Kunststoff, mit einer Bearbeitungseinheit (8) zum Abtragen von durch Zusammenschweißen der Profilstücke (12, 14) entstandenen Schweißraupen entlang einer Erstreckungsrichtung (E) der Eckverbindung (10), wobei die Bearbeitungseinheit (8) wenigstens ein Bearbeitungswerkzeug (9, 40) sowie wenigstens ein Tastelement (34) aufweist, mithilfe dessen die Bearbeitungseinheit (8) relativ zu dem Rahmen (16) ausrichtbar ist, wobei die Bearbeitungseinheit (8) an einem Werkzeughalter (6) angeordnet ist, wobei die Bearbeitungseinheit (8) etwa senkrecht zu einer Aufnahmeebene (20) des Rahmens (16) und entlang der Erstreckungsrichtung (E) der Eckverbindung (10) verschiebbar ist, wobei das wenigstens eine Bearbeitungswerkzeug (9, 40) in der Aufnahmeebene (20) des Rahmens (16) verschwenkbar gehalten ist, sodass das Bearbeitungswerkzeug (9, 40) im Wesentlichen oder vollständig parallel zur Erstreckungsrichtung (E) der Eckverbindung (10) einstellbar ist, **dadurch gekennzeichnet, dass** das Bearbeitungswerkzeug (9, 40) relativ zu dem Werkzeughalter (6) senkrecht zur Erstreckungsrichtung (E) der Eckverbindung (10) verschiebbar ist.

2. Eckverputzvorrichtung nach Anspruch 1, **dadurch gekennzeichnet, dass** die Bearbeitungseinheit (8) mittels einer Lagerung drehbar an einer Führung (4) gelagert ist.

3. Eckverputzvorrichtung nach Anspruch 2, **dadurch gekennzeichnet, dass** die Führung eine Achse (4) aufweist, auf der die Bearbeitungseinheit (8) gelagert ist.

4. Eckverputzvorrichtung nach Anspruch 1 bis 3, **dadurch gekennzeichnet, dass** die Bearbeitungseinheit als Schlitten (8) ausgebildet ist, mittels dessen das wenigstens eine Bearbeitungswerkzeug (9, 40) an der Bearbeitungseinheit (8) senkrecht zur Erstreckungsrichtung (E) verschiebbar angeordnet ist.

5. Eckverputzvorrichtung nach einem der vorangegangenen Ansprüche, **dadurch gekennzeichnet, dass** der verschwenkbare Werkzeughalter (6) arretierbar ist.

6. Eckverputzvorrichtung nach einem der vorangegangenen Ansprüche, **dadurch gekennzeichnet, dass** die Bearbeitungseinheit (8) arretierbar ist.

7. Eckverputzvorrichtung nach einem der Ansprüche 5 oder 6, **dadurch gekennzeichnet, dass** die Arretierung mittels wenigstens einem Klemmhebel (54; 60) aktivierbar ist.

8. Eckverputzvorrichtung nach Anspruch 7, **dadurch gekennzeichnet, dass** der Klemmhebel (54; 60) hydraulisch oder pneumatisch betätigbar ist.

9. Eckverputzvorrichtung nach einem der vorangegangenen Ansprüche, wobei die Bearbeitungseinheit (8) wenigstens ein seitlich von dem Bearbeitungswerkzeug (9, 40) angeordnetes Tastelement (34) aufweist.

10. Verfahren zum Betrieb einer Eckverputzvorrichtung (2), wobei eine Bearbeitungseinheit (8) schwimmend verschwenkbar an einer Führung (4) gelagert ist, wobei die Bearbeitungseinheit (8) an eine Innenecke (24) eines zu bearbeitenden Rahmens (16) angefahren wird, wobei die Bearbeitungseinheit (8) mittels wenigstens eines an ihm angeordneten Tastelements (34, 36, 38) zum Rahmen (16) axial positioniert wird, wobei die Bearbeitungseinheit (8) mittels der Verschwenkbarkeit hinsichtlich seiner Ausrichtung positioniert wird, **dadurch gekennzeichnet, dass** die Bearbeitungseinheit (8) schwimmend an einem Werkzeughalter (6) geführt ist, wobei beim Anfahren an die Innenecke (24) des Rahmens (16) ein seitlicher Versatz der tatsächlichen Lage der Innenecke (24) zu einer Ideallage mittels der schwimmenden Lagerung der Bearbeitungseinheit (8) ausgeglichen wird.

11. Verfahren nach Anspruch 10, **dadurch gekennzeichnet, dass** die schwimmende Lagerung und/oder die schwimmende Führung nach der Positionierung, aber vor einem Abstechen einer Schweißraupe (18) arretiert wird.

## Claims

1. Corner-trimming device for processing corner joints (10) of frames (16) that are welded together from profile pieces (12, 14), in particular window and door frames, in particular made of plastic material, having a machining unit (8) for removing welding beads, which are created by welding together the profile pieces (12, 14), along a direction of extension (E) of the corner joint (10), wherein the machining unit (8) has at least one machining tool (9, 40) as well at least one tactile element (34), by means of which the machining unit (8) can be aligned relative to the frame (16), wherein the machining unit (8) is arranged at a tool holder (6), wherein the machining unit (8) can be displaced approximately vertically to a reception plane (20) of the frame (16) and along the direction of extension (E) of the corner joint (10), wherein the at least one machining tool (9, 40) is supported in a pivotable manner in the reception plane (20) of the frame (16), so that the machining tool (9, 40) can be adjusted so as to be substantially or completely in parallel to the direction of extension (E) of the corner joint (10), **characterized in that** the machining tool (9, 40) can be displaced vertically to the direction of extension (E) of the corner joint (10) relative to the tool holder (6).

2. Corner-trimming device according to claim 1, **characterized in that** the machining unit (8) is mounted at a guide (4) in a rotatable manner by means of a mounting.

3. Corner-trimming device according to claim 2, **characterized in that** the guide has an axis (4) on which the machining unit (8) is mounted.

4. Corner-trimming device according to claim 1 to 3, **characterized in that** the machining unit is configured as a carriage (8), by means of which the at least one machining tool (9, 40) is mounted at the machining unit (8) so as to be displaceable vertically to the direction of extension (E).

5. Corner-trimming device according to one of the preceding claims, **characterized in that** the pivotable tool holder (6) is lockable.

6. Corner-trimming device according to one of the preceding claims, **characterized in that** the machining unit (8) is lockable.

7. Corner-trimming device according to one of claims 5 or 6, **characterized in that** locking can be activated by means of at least one clamping lever (54; 60).

8. Corner-trimming device according to claim 7, **characterized in that** the clamping lever (54; 60) can be actuated in a hydraulic or pneumatic manner.

9. Corner-trimming device according to one of the preceding claims, wherein the machining unit (8) has at least one tactile element (34) that is arranged laterally with respect to the machining tool (9, 40).

10. Method for operating a corner-trimming device (2), wherein a machining unit (8) is mounted at a guide (4) in a floatingly pivotable manner, wherein the machining unit (8) is made to approach at an inner corner (24) of a frame (16) to be processed, wherein the machining unit (8) is positioned axially to the frame (16) by means of at least one tactile element (34, 36, 38) that is arranged thereat, wherein the machining unit (8) is positioned with respect to its orientation by means of the pivotability, **characterized in that** the machining unit (8) is guided at a tool holder (6) in a floating manner, wherein a lateral offset of the actual length of the inner corner (24) with respect to an ideal length is compensated for by means of the floating mounting of the machining unit (8) as the inner corner (24) of the frame (16) is being approached.

11. Method according to claim 10, **characterized in that** the floating mounting and/or the floating guide are locked after positioning, but before removal of a welding bead (18).

## Revendications

1. Appareil pour enlever des bavures de coins pour l'usinage de jonctions de coin (10) de châssis (16) soudés à partir d'éléments de profilé (12, 14), en particulier de châssis de fenêtres ou de portes, en particulier en matériau synthétique, avec une unité d'usinage (8) pour enlever des cordons de soudure formés, lors de l'assemblage par soudage des éléments de profilé (12, 14), le long de la direction d'extension (E) de la jonction de coin (10), dans lequel l'unité d'usinage (8) présente au moins un outil d'usinage (9, 40) ainsi qu'au moins un élément palpeur (34), à l'aide duquel l'unité d'usinage (8) peut être orientée par rapport au châssis (16), dans lequel l'unité d'usinage (8) est disposée sur un porte-outil (6), dans lequel l'unité d'usinage (8) peut être déplacée sensiblement perpendiculairement à un plan de réception (20) du châssis (16) et le long de la direction d'extension (E) de la jonction de coin (10), dans lequel ledit au moins un outil d'usinage (9, 40) est maintenu de façon pivotante dans le plan de réception (20) du châssis (16), de telle manière que l'outil d'usinage (9, 40) soit réglable de façon essentiellement ou totalement parallèle à la direction d'extension (E) de la jonction de coin (10), **caractérisé en ce que** l'outil d'usinage (9, 40) peut être déplacé par rapport au porte-outil (6) perpendiculairement à la direction d'extension (E) de la jonction de coin (10).

2. Appareil pour enlever des bavures de coins selon la revendication 1, **caractérisé en ce que** l'unité d'usinage (8) est montée sur un guidage (4) de façon tournante au moyen d'un appui.

3. Appareil pour enlever des bavures de coins selon la revendication 2, **caractérisé en ce que** le guidage présente un axe (4), sur lequel l'unité d'usinage (8) est montée.

4. Appareil pour enlever des bavures de coins selon une revendication 1 à 3, **caractérisé en ce que** l'unité d'usinage (8) est réalisée sous la forme d'un chariot, au moyen duquel ledit au moins un outil d'usinage (9, 40) est disposé sur l'unité d'usinage (8) de façon déplaçable perpendiculairement à la direction d'extension (E).

5. Appareil pour enlever des bavures de coins selon l'une quelconque des revendications précédentes, **caractérisé en ce que** le porte-outil pivotant (6) peut être bloqué.

6. Appareil pour enlever des bavures de coins selon l'une quelconque des revendications précédentes, **caractérisé en ce que** l'unité d'usinage (8) peut être bloquée.

7. Appareil pour enlever des bavures de coins selon l'une des revendications 5 ou 6, **caractérisé en ce que** le blocage peut être activé au moyen d'au moins un levier de serrage (54; 60).

8. Appareil pour enlever des bavures de coins selon la revendication 7, **caractérisé en ce que** le levier de serrage (54; 60) peut être actionné par voie hydraulique ou pneumatique.

9. Appareil pour enlever des bavures de coins selon l'une quelconque des revendications précédentes, dans lequel l'unité d'usinage (8) présente au moins un élément palpeur (34) disposé latéralement à l'outil d'usinage (9, 40).

10. Procédé pour faire fonctionner un appareil pour enlever des bavures de coins (2), dans lequel une unité d'usinage (8) est montée en position flottante de façon pivotante sur un guidage (4), dans lequel on fait démarrer l'unité d'usinage (8) à un coin intérieur (24) d'un châssis à usiner (16), dans lequel on positionne l'unité d'usinage axialement au châssis (16) au moyen d'un élément palpeur (34, 36, 38) disposé sur celui-ci, dans lequel on positionne l'unité d'usinage (8) à l'égard de son orientation au moyen de sa capacité de pivotement, **caractérisé en ce que** l'unité d'usinage (8) est guidée de façon flottante sur un porte-outil (6), dans lequel, lors du démarrage au coin intérieur (24) du châssis (16), on compense un décalage latéral de la position effective du coin intérieur (24) par rapport à une position idéale au moyen de l'appui flottant de l'unité d'usinage (8).

11. Procédé selon la revendication 10, **caractérisé en ce que** l'on bloque l'appui flottant et/ou le guidage flottant après le positionnement, mais avant un décolletage d'un cordon de soudure (18).
